# EUROPEAN PATENT APPLICATION

(11) **EP 4 116 927 A1**
(43) Date of publication of application: **11.01.2023**
(21) Application number: 20922859.2
(22) Date of filing: 03.03.2020
(51) Int. Cl.: G06T 7/00

(54) **FEATURE CONVERSION DEVICE, IMAGE RECOGNITION SYSTEM, FEATURE CONVERSION METHOD, AND NON-TRANSITORY COMPUTER-READABLE MEDIUM**

(71) Applicant: NEC Corporation, 108-8001 Tokyo (JP)
(72) Inventor: FUKUI Hiroshi, Tokyo 108-8001 (JP)
(74) Representative: Betten & Resch
(86) International application number: PCT/JP2020/008953
(87) International publication number: WO 2021/176566

(57) **Abstract**

A feature conversion device (10) according to one aspect of the present disclosure includes: an intermediate acquisition unit (100) that acquires a feature map indicating a feature of an image; an embedding unit (120) that performs block-based feature embedding computation on the acquired feature map and generates an embedded feature map which is converted so that its scale is reduced; and a weighting unit (160) that predicts an attention weight of the feature associated to a position of the image from information based on the embedded feature map by using an attention mechanism algorithm and generates a weighted feature map associated to the feature map by using the attention weight.

## Description

### Technical Field

The present disclosure relates to a feature conversion device, an image recognition system, a feature conversion method, and a non-transitory computer-readable medium.

### Background Art

In subject recognition of a target image, it is known to use an attention mechanism for calculating a weight of attention when recognizing a subject from a target image and weighting a feature map of an extracted target image according to a weight of attention. For example, Non Patent Literature 1 discloses that, in such an attention mechanism, a weight of attention is calculated by performing matrix product computation of a feature map, and the feature map is weighted.

### Citation List

### Non Patent Literature

[Non Patent Literature 1] X. Wang, R. Girshick, A. Gupta, K. He, "Non-local Neural Networks", Computer Vision and Pattern Recognition, filed November 21, 2017

### Summary of Invention

### Technical Problem

An object of the present disclosure is to improve upon the related art.

### Solution to Problem

A feature conversion device according to one aspect of the present disclosure includes: an intermediate acquisition unit that acquires a feature map indicating a feature of an image; an embedding unit that performs block-based feature embedding computation on the acquired feature map and generates an embedded feature map which is converted so that its scale is reduced; and a weighting unit that predicts an attention weight of the feature associated to a position of the image from information based on the embedded feature map by using an attention mechanism algorithm and generates a weighted feature map associated to the feature map by using the attention weight.

An image recognition system according to one aspect of the present disclosure includes: a feature conversion device including an intermediate acquisition unit that acquires a feature map indicating a feature of an image, an embedding unit that generates an embedded feature map which is converted so that its scale is reduced, by using block-based feature embedding computation, based on the acquired feature map, and a weighting unit that predicts an attention weight of the feature associated to a position of the image from information based on the embedded feature map by using an attention mechanism algorithm and generates a weighted feature map associated to the feature map by using the attention weight; and a recognition device that recognizes a subject included in the image by using information based on the weighted feature map.

A feature conversion method according to one aspect of the present disclosure includes: a step of acquiring a feature map indicating a feature of an image; a step of performing block-based feature embedding computation on the acquired feature map and generating an embedded feature map which is converted so that its scale is reduced; and a step of predicting an attention weight of the feature associated to a position of the image from information based on the embedded feature map by using an attention mechanism algorithm and generating a weighted feature map associated to the feature map by using the attention weight.

A non-transitory computer-readable medium according to one aspect of the present disclosure stores a feature conversion program causing a computer to achieve: an intermediate acquisition function of acquiring a feature map indicating a feature of an image; an embedding function of performing block-based feature embedding computation on the acquired feature map and generating an embedded feature map which is converted so that its scale is reduced; and a weighting function of predicting an attention weight of the feature associated to a position of the image from information based on the embedded feature map by using an attention mechanism algorithm and generating a weighted feature map associated to the feature map by using the attention weight.

### Brief Description of Drawings

Fig. 1 is a block diagram illustrating a configuration of a feature conversion device according to a first example embodiment;
Fig. 2 is a schematic configuration diagram illustrating one example of an image recognition system to which a feature conversion device according to a second example embodiment can be applied;
Fig. 3 is a diagram for explaining an effect of processing by the feature conversion device according to the second example embodiment;
Fig. 4 is a diagram for explaining an outline of processing of an attention mechanism according to the second example embodiment;
Fig. 5 is a block diagram illustrating a configuration of the attention mechanism according to the second example embodiment;
Fig. 6 is a flowchart illustrating processing of the image recognition system according to the second example embodiment;
Fig. 7 is a flowchart illustrating the processing of the attention mechanism according to the second example embodiment;
Fig. 8 is a flowchart illustrating feature embedding processing of an embedding unit according to the second example embodiment;
Fig. 9 is a flowchart illustrating learning processing of the image recognition system according to the second example embodiment;
Fig. 10 is a block diagram illustrating a configuration of an attention mechanism according to a third example embodiment;
Fig. 11 is a flowchart illustrating feature embedding processing of an embedding unit according to the third example embodiment;
Fig. 12 is a diagram for explaining an outline of processing of an attention mechanism according to a fourth example embodiment;
Fig. 13 is a block diagram illustrating a configuration of the attention mechanism according to the fourth example embodiment;
Fig. 14 is a flowchart illustrating the processing of the attention mechanism according to the fourth example embodiment;
Fig. 15 is a diagram for explaining an outline of processing of an attention mechanism according to a fifth example embodiment;
Fig. 16 is a block diagram illustrating a configuration of the attention mechanism according to the fifth example embodiment;
Fig. 17 is a flowchart illustrating the processing of the attention mechanism according to the fifth example embodiment; and
Fig. 18 is a schematic configuration diagram of a computer according to the present example embodiments.

### Example Embodiment

### (First Example Embodiment)

A first example embodiment of the present disclosure will be described below with reference to the drawings. In the drawings, the same or associated elements are denoted by the same reference numerals, and duplicate descriptions are omitted as necessary for clarity of description.

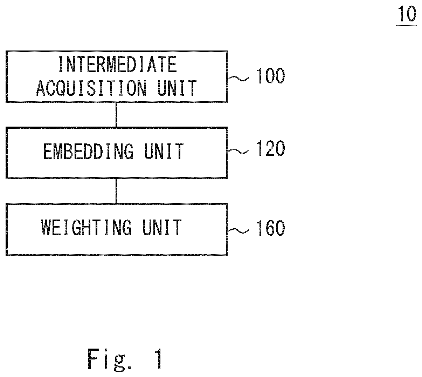

Fig. 1 is a block diagram illustrating a configuration of a feature conversion device 10 according to the first example embodiment. The feature conversion device 10 includes an intermediate acquisition unit 100, an embedding unit 120, and a weighting unit 160.

The intermediate acquisition unit 100 acquires a feature map indicating a feature of an image.

The embedding unit 120 performs block-based feature embedding computation on the acquired feature map and generates an embedded feature map which is converted so that its scale is reduced.

The weighting unit 160 predicts an attention weight of the feature associated to a position of the image from information based on the embedded feature map by using an attention mechanism algorithm, and generates a weighted feature map associated to the feature map by using the attention weight.

According to the configuration of the first example embodiment, the feature conversion device 10 generates an embedded feature map whose scale is reduced and converted from the acquired feature map, and generates a weighted feature map by using the attention mechanism algorithm. Therefore, a computation amount in the attention mechanism algorithm (in particular, a computation amount of a matrix product), can be greatly reduced. In addition, since the feature conversion device 10 reduces a scale of the feature map on a block basis, it is possible to widen an acceptance field in a case of calculating the attention weight in the attention mechanism algorithm.

### (Second Example Embodiment)

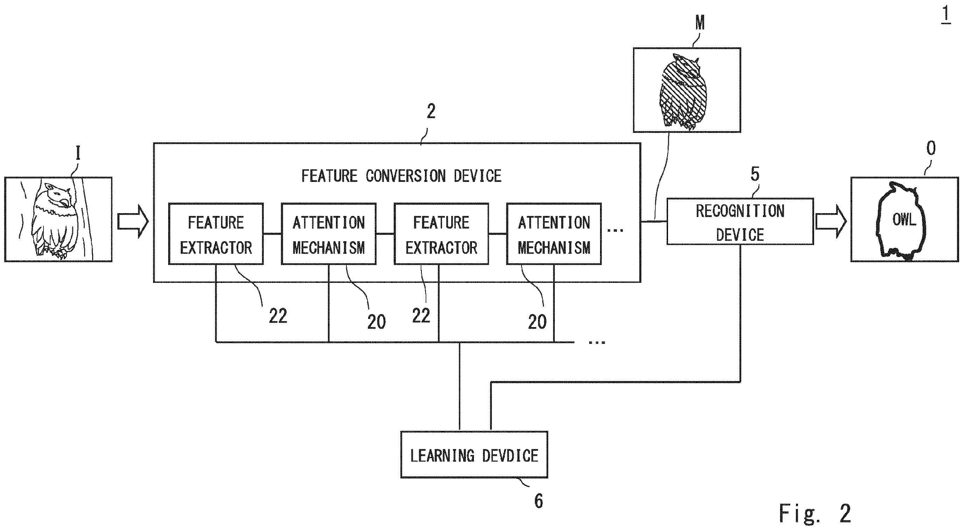

Next, a second example embodiment of the present disclosure will be described by using Figs. 2 to 9. Fig. 2 is a schematic configuration diagram illustrating one example of an image recognition system 1 to which a feature conversion device 2 according to the second example embodiment can be applied.

The image recognition system 1 is a computer or the like that recognizes a subject included in an input image I. The image recognition system 1 includes the feature conversion device 2, a recognition device 5, and a learning device 6.

The feature conversion device 2 is a computer or the like that generates a feature map M from an input image I and inputs the feature map M to the recognition device 5. Herein, each feature map M is a matrix indicating an intensity of response (i.e., a feature amount) to a kernel (filter) to be used in feature conversion processing such as feature extraction processing and attention mechanism processing, which will be described later, for each region of the input image I. More specifically each feature map M indicates a feature of the input image I. The feature conversion device 2 includes a feature extractor 22 and an attention mechanism 20. The feature extractor 22 and the attention mechanism 20 have a function of a convolution layer, a fully connected layer, or the like, which is used in a neural network and a convolution neural network including parameters learned by machine learning such as depth learning.

The feature extractor 22 is a computer or the like that extracts features of the input image I by performing various processing on the input image I and generates one or a plurality of feature maps M. The feature extractor 22 performs various types of processing such as convolution processing and pooling processing for extracting features by using the learned parameters. The feature extractor 22 outputs the generated feature map M to the attention mechanism 20.

The attention mechanism 20 is a computer or the like that calculates an attention weight from the feature map M being output from the feature extractor 22, weights the feature map M with the calculated attention weight, and generates a weighted feature map M. Herein, the attention mechanism 20 calculates an attention weight, which is a weight of attention, for each of a plurality of regions included in the input image I, and uses an attention mechanism algorithm for paying attention according to the attention weight to features extracted from those regions. The attention mechanism algorithm is an algorithm that computes a matrix product in two stages. The attention weight indicates a strength of a correlation between the feature of each of the plurality of regions of the input image I and the feature of another region. The attention weight in this specification differs from a weight of each pixel of the kernel to be used for convolution processing or the like in that the attention weight is a weight in consideration of the macroscopic positional relationship of the entire input image I. The weighted feature map M is acquired by weighting each pixel of the feature map M with an associated attention weight, i.e., the feature amount is given strength and weakness.

The attention mechanism 20 uses the learned parameters, embeds features in the feature map M, and generates a weighted feature map M. In this specification, embedding is defined as converting, in order to generate an input matrix for calculating attention weights in an attention mechanism algorithm and an input matrix for performing weighting, a feature amount of the feature map M according to a type of the input matrix. The attention mechanism 20 then outputs the weighted feature map M to a subsequent device.

In this figure, the feature conversion device 2 has a configuration in which a plurality of sets of the feature extractor 22 and the attention mechanism 20 are connected in series. Thus, the distal attention mechanism 20 outputs the weighted feature map M to the recognition device 5, and the other attention mechanisms 20 output the weighted feature map M to the subsequent feature extractor 22. The feature extractor 22 and the attention mechanism 20 may be regularly and repeatedly connected, or may be irregularly connected, such as the feature extractor 22→the feature extractor 22→the attention mechanism 20→..... However, the feature conversion device 2 may include only one set of the feature extractor 22 and the attention mechanism 20.

The recognition device 5 is a computer or the like that recognizes a subject included in the input image I by using information based on the weighted feature map M. The recognition device 5 performs one or a plurality of processing of detecting, identifying, tracking, classifying the subject included in the input image I, and any other optional recognition processing, and outputs an output value O. The recognition device 5 performs the recognition processing by using parameters learned by machine learning such as deep learning. The recognition device 5 also has a function of a convolution layer, a fully connected layer, or the like, which is used in a neural network and a convolution neural network.

The learning device 6 is a computer or the like connected to the feature extractor 22 and the attention mechanism 20 of the feature conversion device 2, and the recognition device 5, and updates and optimizes various parameters to be used for processing of these devices by learning. The learning device 6 inputs the learning data to the first feature extractor 22 of the feature conversion device 2, and performs learning processing of updating various parameters, based on a difference between the recognition result being output from the recognition device 5 and a correct label. Then, the learning device 6 outputs the optimized various parameters to the feature extractors 22, the attention mechanisms 20, and the recognition device 5. In the second example embodiment, the learning device 6 includes a learning database (not illustrated) for storing learning data. However, the present embodiment is not limited to this, and the learning database may be included in another device (not illustrated) or the like that is communicably connected to the learning device 6.

The feature conversion device 2, the recognition device 5, and the learning device 6 may be constituted of a plurality of computers or the like, or may be constituted of a single computer or the like. When each device is constituted of a plurality of computers or the like, each device may be communicably connected through various networks such as the Internet, a wide area network (WAN), or a local area network (LAN).

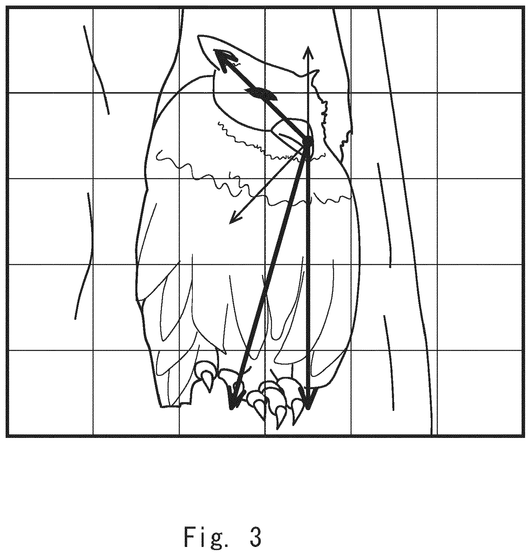

Fig. 3 is a diagram for explaining an effect of processing of the feature conversion device 2 according to the second example embodiment. As illustrated in this figure, the feature conversion device 2 captures the feature of the input image I in units of blocks including a plurality of pixels, and calculates an attention weight indicating a strength of correlation between each of a plurality of blocks and a specific block. Then, the feature conversion device 2 generates a weighted feature map in accordance with the calculated attention weight. As described above, since the feature conversion device 2 calculates the attention weight in units of blocks, an acceptance field can be extended, and the calculation of the correlation between the positions can be made more efficient.

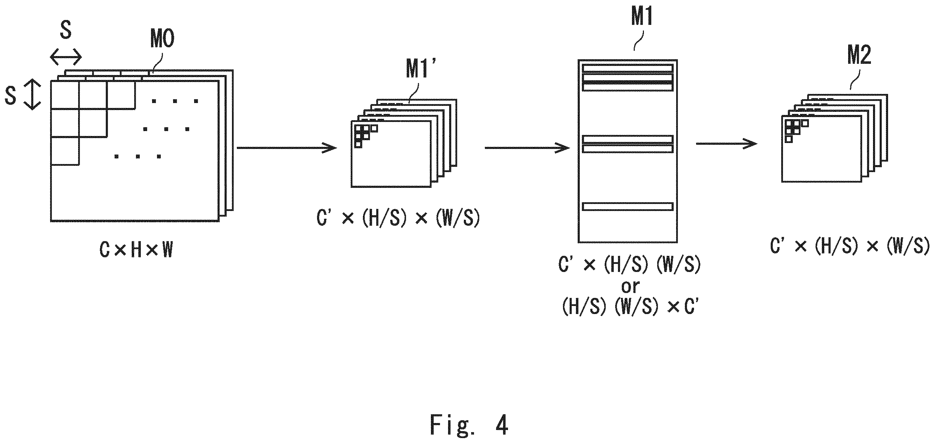

Next, an outline of processing of the attention mechanism 20 of the feature conversion device 2 will be described by using Fig. 4. Fig. 4 is a diagram for explaining an outline of the processing of the attention mechanism 20 according to the second example embodiment.

First, the attention mechanism 20 acquires a feature map M(M0) from the feature extractor 22. This feature map M0 is a third-order tensor of CxHxW (C, H, and W are natural numbers). Herein, C represents the number of channels, H represents the number of pixels in a vertical direction of each feature map M, and W represents the number of pixels in a horizontal direction of each feature map M.

Next, the attention mechanism 20 generates an embedded feature map M1' having a reduced scale by using a block-based feature embedding processing, which will be described later. Herein, the scale indicates a magnitude of the number of pixels in the vertical direction or the horizontal direction of each feature map M. The block is an aggregate of pixels having the number of pixels of SxS in the second example embodiment (S is a natural number). The embedded feature map M1' has a configuration in which a matrix of (H/S)x(W/S) has a C' channel (C' is a natural number), i.e., the embedded feature map M1' is a third-order tensor of C'x(H/S)x(W/S). The attention mechanism 20 generates the embedded feature map M1, based on the embedded feature map M1'. Herein, the embedded feature map M1 is a matrix of C'x(H/S)(W/S) or (H/S)(W/S)xC'.

Next, the attention mechanism 20 performs weighting with an attention weight, based on the embedded feature map M1, and generates a weighted feature map M2 subjected to matrix conversion. The weighted feature map M2 is a third-order tensor of C'x(H/S)x(W/S).

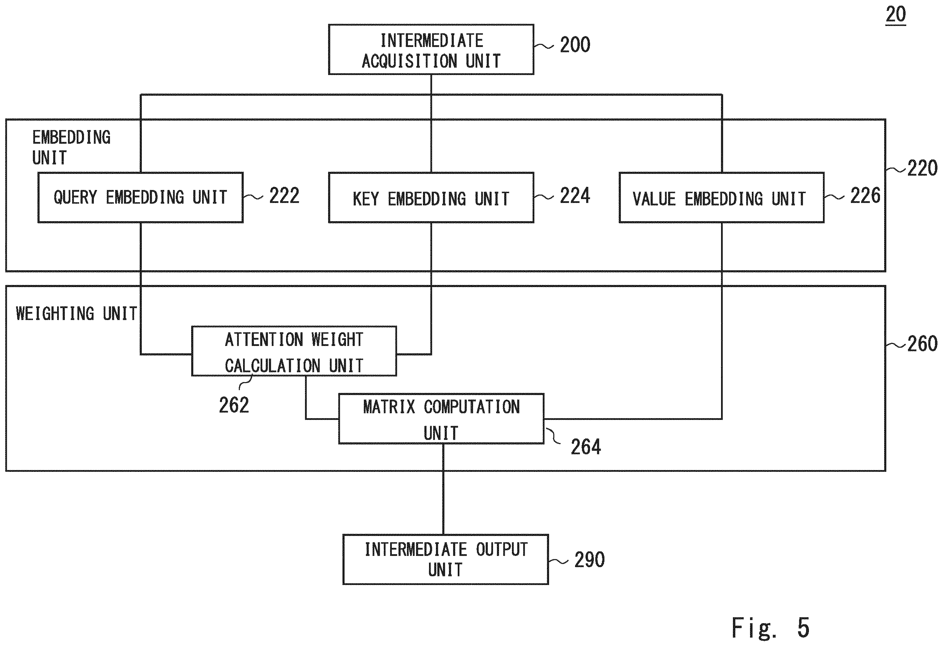

A configuration of the attention mechanism 20 that performs such processing will be described by using Fig. 5. Fig. 5 is a block diagram illustrating the configuration of the attention mechanism 20 according to the second example embodiment. The attention mechanism 20 includes an intermediate acquisition unit 200, an embedding unit 220, a weighting unit 260, and an intermediate output unit 290.

The intermediate acquisition unit 200 acquires the feature map M0 from the feature extractor 22. The intermediate acquisition unit 200 outputs the acquired feature map M0 to the embedding unit 220.

The embedding unit 220 performs block-based feature embedding computation or the like on the acquired feature map M0, and generates an embedded feature map M1 which is converted so that its scale is reduced. The embedding unit 220 includes a query embedding unit 222, a key embedding unit 224, and a value embedding unit 226.

The query embedding unit 222 and the key embedding unit 224 are each input to an attention weight calculation unit 262 of the weighting unit 260, which will be described later, and generate an embedded feature map M1 which functions as a query and a key of an input matrix in the attention mechanism algorithm. The query embedding unit 222 and the key embedding unit 224 each perform block-based feature embedding computation processing and the like on the feature map M0 by using the parameters optimized by the learning device 6.

The value embedding unit 226 is input to a matrix computation unit 264 of the weighting unit 260, which will be described later, and generates an embedded feature map M1 which functions as a value of an input matrix in the attention mechanism algorithm. Similar to the query embedding unit 222 and the key embedding unit 224, the value embedding unit 226 performs block-based feature embedding computation processing and the like on the feature map M0 by using the parameters optimized by the learning device 6.

The weighting unit 260 uses an attention mechanism algorithm in which a query, a key, and a value are input matrices. In the second example embodiment, the attention mechanism algorithm may be a self-attention mechanism algorithm, but the present embodiment is not limited to this, and may be another attention mechanism algorithm such as a source target attention mechanism algorithm. In the attention mechanism algorithm, the weighting unit 260 generates a weighted feature map M2 associated to the feature map M0 from the embedded feature map M1 being output from the query embedding unit 222, the key embedding unit 224, and the value embedding unit 226. The weighting unit 260 includes an attention weight calculation unit 262, and a matrix computation unit 264.

The attention weight calculation unit 262 predicts an attention weight of the feature associated to a position in the input image I, from the information based on the embedded feature map M1 being output from the query embedding unit 222 and the key embedding unit 224. The attention weight calculation unit 262 outputs the attention weight to the matrix computation unit 264.

The matrix computation unit 264 performs weighting on the embedded feature map M1 being output from the value embedding unit 226 by using the attention weight, performs matrix conversion and generates a weighted feature map M2. The matrix computation unit 264 outputs the weighted feature map M2 to the intermediate output unit 290.

The intermediate output unit 290 outputs the weighted feature map M2 to a subsequent device or the like (the recognition device 5, or when the feature extractor 22 is subsequently connected, the subsequent feature extractor 22.)

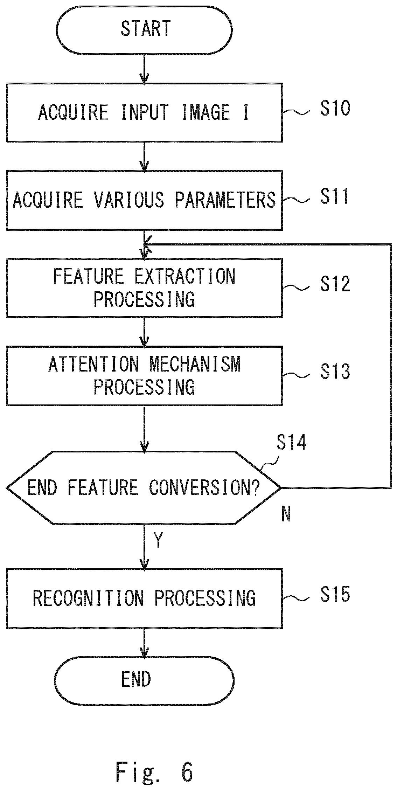

Next, processing of the image recognition system 1 will be described by using Fig. 6. Fig. 6 is a flowchart illustrating the processing of the image recognition system 1 according to the second example embodiment.

First, in S10, the feature extractor 22 of the feature conversion device 2 acquires an input image I.

Next, in S11, the feature extractor 22, the attention mechanism 20, and the recognition device 5 acquire various optimized parameters to be used in later-described processing from the learning device 6.

Next, in S12, the feature extractor 22 performs feature extraction processing including convolution processing, pooling processing, and the like, and generates a feature map M0 in which the features of the input image I are extracted. The feature extractor 22 outputs the feature map M0 to the attention mechanism 20.

Next, in S13, the attention mechanism 20 performs attention mechanism processing on the feature map M0 and generates a weighted feature map M2.

In S14, the attention mechanism 20 determines whether to end the processing (feature conversion processing) of S12 and S13. When the processing is ended (Y in S14), the attention mechanism 20 outputs the weighted feature map M2 to the recognition device 5, and advances the processing to S15. When the processing is not ended (N in S14), the attention mechanism 20 outputs the weighted feature map M2 to the subsequent feature extractor 22, and returns the processing to S12.

Next, in S15, the recognition device 5 performs predetermined recognition processing by using information based on the weighted feature map M2. Then, the recognition device 5 ends the processing.

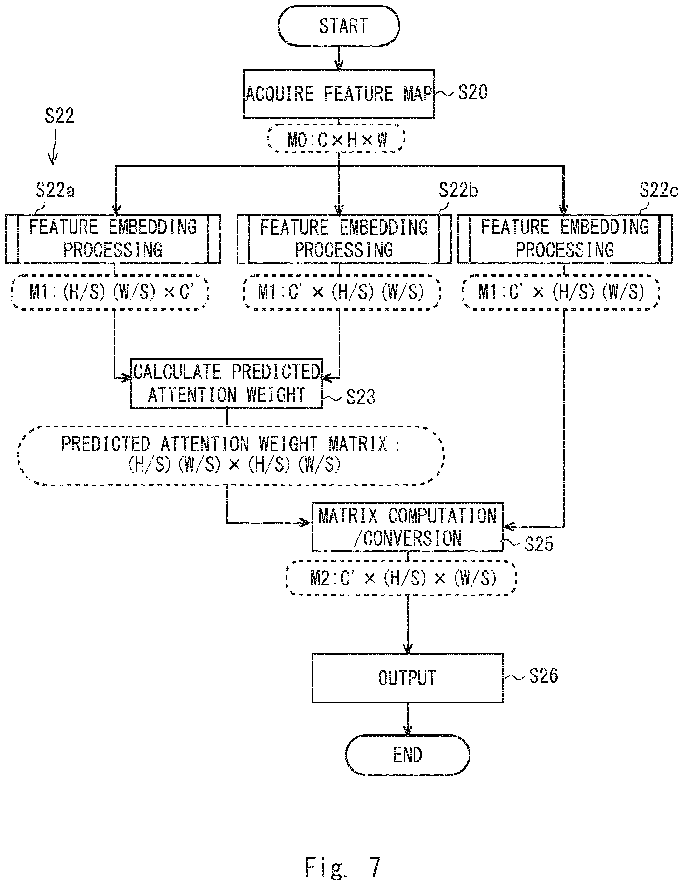

Fig. 7 is a flowchart illustrating the processing of the attention mechanism 20 according to the second example embodiment (the attention mechanism processing of S13 illustrated in Fig. 6).

First, in S20, the intermediate acquisition unit 200 of the attention mechanism 20 acquires the feature map M0 from the feature extractor 22.

Next, in S22, the embedding unit 220 performs feature embedding processing and generates an embedded feature map M1 which has been converted so that its scale has been reduced by a factor of 1/S. Herein, the query embedding unit 222 performs feature embedding processing in S22a and generates an embedded feature map M1 of (H/S)(W/S)xC'. The key embedding unit 224 performs feature embedding processing in S22b and generates an embedded feature map M1 of C'x(H/S)(W/S). The value embedding unit 226 performs feature embedding processing in S22c and generates an embedded feature map M1 of C'x(H/S)(W/S). Details of the feature embedding processing will be described later. The query embedding unit 222 and the key embedding unit 224 output the embedded feature map M1 to the attention weight calculation unit 262. On the other hand, the value embedding unit 226 outputs the embedded feature map M1 to the matrix computation unit 264.

Next, in S23, the attention weight calculation unit 262 of the weighting unit 260 computes the matrix product of the first stage by using the embedded feature map M1 being output from the query embedding unit 222 and the embedded feature map M1 being output from the key embedding unit 224. Thus, the attention weight calculation unit 262 calculates a predicted attention weight matrix having a scale of (H/S)(W/S)x(H/S)(W/S). At this time, the attention weight calculation unit 262 may perform normalization processing using an activation function such as a soft max function on the computation result of the matrix product and calculate a predicted attention weight matrix. The attention weight calculation unit 262 outputs the predicted attention weight matrix to the matrix computation unit 264.

In S25, the matrix computation unit 264 performs the computation of the matrix product of the second stage by using the predicted attention weight matrix and the embedded feature map M1 being output from the value embedding unit 226. Then, the matrix computation unit 264 performs matrix conversion, based on the computation result of the matrix product, and generates a weighted feature map M2 of the third-order tensor. The matrix computation unit 264 outputs the weighted feature map M2 to the intermediate output unit 290.

In S26, the intermediate output unit 290 outputs the weighted feature map M2 to a subsequent device or the like, and ends the processing.

As described above, the feature map that becomes an input of the attention weight calculation unit 262 is converted so that the scale of the feature map is reduced by a factor of (1/S) by the embedding unit 220, whereby a computation amount of the matrix product in the attention weight calculation unit 262 can be reduced by a factor of (1/S²). As a result, the computation amount of the matrix product in the matrix computation unit 264 can be further reduced by a factor of (1/S).

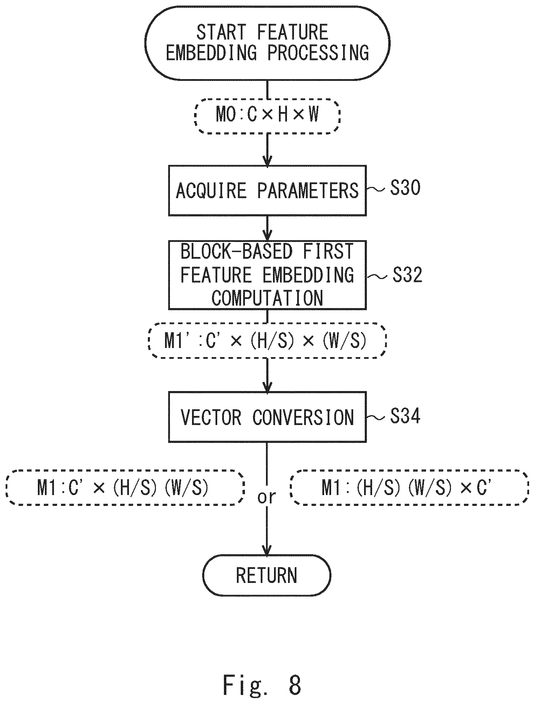

Fig. 8 is a flowchart illustrating the feature embedding processing of the embedding unit 220 according to the second example embodiment (the processing illustrated in S22 of Fig. 7).

First, in S30, the embedding unit 220 acquires the optimized parameters to be used for the subsequent processing from the learning device 6. The parameters include weight parameters for each pixel of the kernel to be used for subsequent block-based first feature embedding computation.

Next, in S32, the embedding unit 220 performs block-based first feature embedding computation on the feature map M0. Herein, the block-based first feature embedding computation includes computation of convolving or pooling a plurality of pixel values included in the feature map M0 by applying the kernel at the same number of intervals (the number of strides) as the number of pixels S (where S>1) in a first direction of the kernel. The first direction may be longitudinal or transverse. More specifically, the embedding unit 220 shifts and applies the kernel having the number of pixels of SxS to the feature map M0 S by S. As a result, the feature map can be downsampled, and the scale of the feature map can be reduced and converted.

The kernels to be used in the query embedding unit 222, the key embedding unit 224, and the value embedding unit 226 of the embedding unit 220 may have weight parameters independent of each other. In the second example embodiment, the query embedding unit 222, the key embedding unit 224, and the value embedding unit 226 each function as a one-layer block-based convolution layer or a pooling layer, but the present embodiment is not limited thereto, and may function as a multiple-layer block-based convolution layer or a pooling layer.

In S32, the embedding unit 220 does not need to perform zero padding on the feature map M0. Thereby, it is possible to avoid that a feature including a zero component is included in the generated embedded feature map M1, and it is possible to avoid that a feature including the zero component is shared by all the features by the attention mechanism algorithm.

Thus, the embedding unit 220 generates an embedded feature map M1' of C'x(H/S)x(W/S).

Next, in S34, the embedding unit 220 performs vector conversion on the embedded feature map M1' as necessary, and generates the embedded feature map M1 that becomes an input of the attention mechanism. For example, the query embedding unit 222 of the embedding unit 220 may perform matrix conversion, transposition conversion, and the like on the embedded feature map M1' and generate the embedded feature map M1 of (H/S)(W/S)xC'. The key embedding unit 224 and the value embedding unit 226 may perform matrix conversion or the like on the embedded feature map M1' and generate an embedded feature map M1 of C'x(H/S)(W/S). Then, the embedding unit 220 returns the processing to S23 illustrated in Fig. 7.

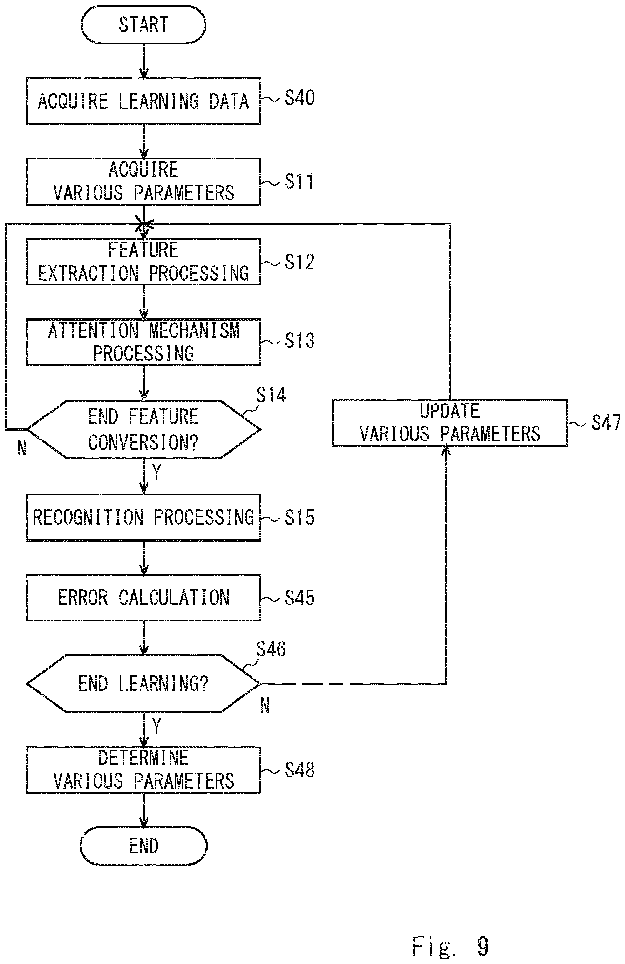

Next, an outline of the learning processing of the image recognition system 1 will be described by using Fig. 9. Fig. 9 is a flowchart illustrating learning processing of the image recognition system 1 according to the second example embodiment. Note that steps similar to those illustrated in Fig. 6 are denoted by the same reference numerals, and descriptions thereof are omitted.

First, in S40, the learning device 6 acquires a large amount of learning data from a learning database (not illustrated). As one example, the learning data may be a data set including an image and a correct label indicating classification of a subject of the image. In the case of performing cross validation, the learning data may be classified into training data and test data. The learning device 6 inputs the image included in the learning data to the feature extractor 22, and advances the processing to S11.

In S45, the learning device 6 calculates an error between the output value O and the correct label of the learning data in response to the recognition processing performed by the recognition device 5 in S15.

Next, in S46, the learning device 6 determines whether to end the learning. In the second example embodiment, the learning device 6 may determine whether to end the learning by determining whether the number of updates has reached a preset number. The learning device 6 advances the processing to S48 when the learning is ended (Y in S46), and otherwise (N in S46) advances the processing to S47.

In S47, the learning device 6 updates various parameters to be used in the feature extractor 22, the attention mechanism 20, and the recognition device 5, based on the calculated error. The various parameters include parameters to be used in the first feature embedding computation of the embedding unit 220 of the attention mechanism 20. As one example, the learning device 6 may update various parameters by using an error back-propagation method. Then, the learning device 6 returns the processing to S12.

In S48, the learning device 6 determines various parameters. Then, the learning device 6 ends the processing.

As described above, according to the second example embodiment, the attention mechanism 20 of the feature conversion device 2 generates the embedded feature map M1 which is converted so that its scale is reduced, by using the block-based feature embedding computation, and calculates the attention weight by the attention mechanism algorithm. Therefore, the computation amount in the attention mechanism algorithm (in particular, the computation amount of the matrix product) can be greatly reduced. In addition, since the attention mechanism 20 of the feature conversion device 2 reduces the scale of the feature map M0 on a block basis, it is possible to widen the acceptance field in the case of calculating a predicted attention weight matrix in the attention mechanism algorithm.

### (Third Example Embodiment)

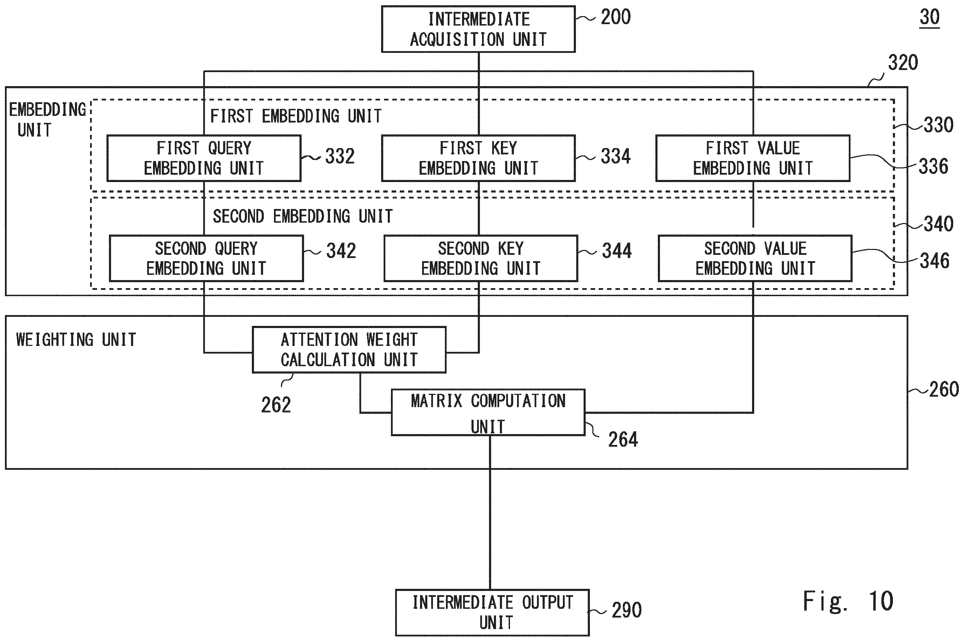

Next, a third example embodiment of the present disclosure will be described by using Figs. 10 to 11. The third example embodiment is characterized in that an embedding unit 320 performs first feature embedding computation and second feature embedding computation.

Fig. 10 is a block diagram illustrating a configuration of an attention mechanism 30 according to the third example embodiment. The attention mechanism 30 is a computer or the like having a configuration and function basically similar to the attention mechanism 20 of the second example embodiment. However, the attention mechanism 30 differs from the attention mechanism 20 in that the attention mechanism 30 includes the embedding unit 320 instead of the embedding unit 220.

The embedding unit 320 has a configuration and function basically similar to the embedding unit 220. However, the embedding unit 320 includes a first embedding unit 330 and a second embedding unit 340.

The first embedding unit 330 has the configuration and function similar to those of the embedding unit 220. The first embedding unit 330 includes a first query embedding unit 332, a first key embedding unit 334, and a first value embedding unit 336. The first query embedding unit 332 has a configuration and function similar to those of the query embedding unit 222, the first key embedding unit 334 has a configuration and function similar to those of the key embedding unit 224, and the first value embedding unit 336 has a configuration and function similar to those of the value embedding unit 226. The first embedding unit 330 generates an embedded feature map M1' that functions as a first embedded feature map, normalizes the embedded feature map M1', and outputs the normalized embedded feature map M1' to the second embedding unit 340.

Based on the embedded feature map M1' being output from the first embedding unit 330, the second embedding unit 340 uses the second feature embedding computation and generates an embedded feature map M1 functioning as a second embedded feature map, which is an input matrix of the attention mechanism algorithm. The second embedding unit 340 includes a second query embedding unit 342, a second key embedding unit 344, and a second value embedding unit 346.

The second query embedding unit 342 generates the embedded feature map M1 functioning as a query of the attention mechanism algorithm from the embedded feature map M1' being output from the first query embedding unit 332. Then, the second query embedding unit 342 outputs the embedded feature map M1 to the attention weight calculation unit 262.

The second key embedding unit 344 generates the embedded feature map M1 functioning as a key of the attention mechanism algorithm from the embedded feature map M1' being output from the first key embedding unit 334. Then, the second key embedding unit 344 outputs the embedded feature map M1 to the attention weight calculation unit 262.

The second value embedding unit 346 generates the embedded feature map M1 functioning as a value of the attention mechanism algorithm from the embedded feature map M1' being output from the first value embedding unit 336. Then, the second value embedding unit 346 outputs the embedded feature map M1 to the matrix computation unit 264.

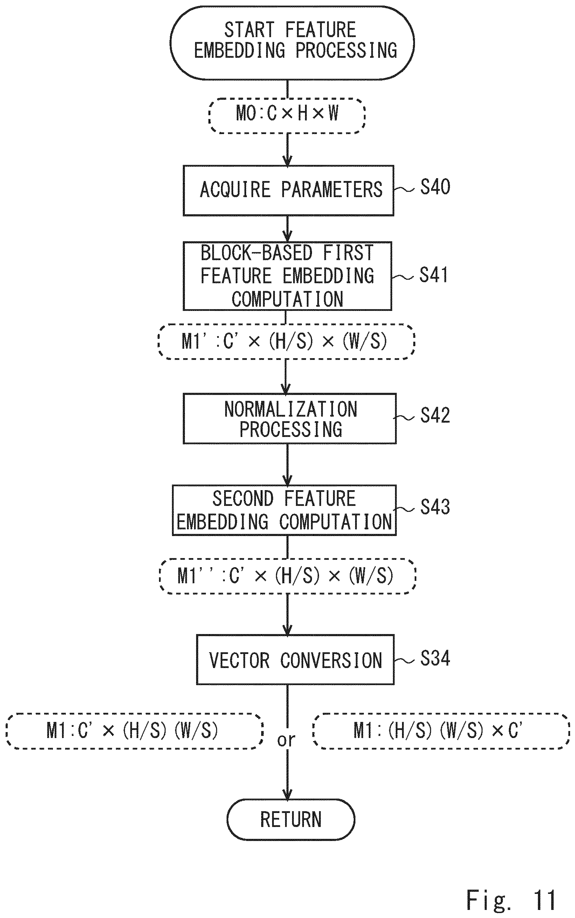

Fig. 11 is a flowchart illustrating the feature embedding processing of the attention mechanism 30 according to the third example embodiment. Steps illustrated in Fig. 11 have S40 to S43 instead of S30 and S32 illustrated in Fig. 8. Note that steps similar to those illustrated in Fig. 8 are denoted by the same reference numerals, and descriptions thereof are omitted.

In S40, the embedding unit 320 acquires the optimized parameters to be used for the subsequent processing from the learning device 6. The parameter includes a weight parameter of each pixel of the kernel to be used for each of the subsequent first feature embedding computation and second feature embedding computation.

In S41, the first embedding unit 330 of the embedding unit 320 performs a block-based first feature embedding processing similar to the processing illustrated in S32 of Fig. 8, and generates an embedded feature map M1'.

In S42, the first embedding unit 330 performs batch normalization (BN) on the generated embedded feature map M1'. This makes it possible to improve efficiency of the learning processing at the time of parameter learning. Additionally or alternatively, the first embedding unit 330 may perform normalization processing using a normalized linear function (ReLU) on the embedded feature map M1'. This makes it possible to further improve the efficiency of the learning processing at the time of parameter learning. The first embedding unit 330 outputs the embedded feature map M1' to an embedding unit associated to the second embedding unit 340.

Note that S42 is not essential and may be omitted.

In S43, the second embedding unit 340 performs second feature embedding computation on the embedded feature map M1' being output from the first embedding unit 330 and generates an embedded feature map M1ʺ of C'x(H/S)x(W/S). In the third example embodiment, the second feature embedding computation includes computation of convolving a plurality of pixel values included in the embedded feature map M1' by applying a kernel in which the number of pixels in the first direction is 1 to the embedded feature map M1' at an interval (the number of strides) of 1. On other words, in the third example embodiment, the scale of the feature map is not changed by the second feature embedding computation. At this time, in S43, the second embedding unit 340 does not need to perform zero padding on the embedding feature map M1'. Thereby, it is possible to avoid that a feature including a zero component is included in the generated embedded feature map M1", and to avoid that the feature including the zero component is shared by all the features by the attention mechanism algorithm.

The kernels to be used in the second query embedding unit 342, the second key embedding unit 344, and the second value embedding unit 346 of the second embedding unit 340 may have weight parameters independent of each other. In the third example embodiment, each of the second query embedding unit 342, the second key embedding unit 344, and the second value embedding unit 346 functions as a single convolution layer, but the present embodiment is not limited thereto, and may function as a plurality of convolution layers.

The second feature embedding computation may alternatively or additionally include convolution computation or pooling computation in which the number of pixels in the first direction of the kernel is N (N is a natural number equal to or greater than 2), and the number of strides is less than N.

Then, the second embedding unit 340 advances the processing to S34.

As described above, according to the third example embodiment, the embedding unit 320 performs the block-based first feature embedding computation on the feature map M0, and then performs the second feature embedding computation other than the block base. By performing the two-stage embedding computation in this manner, calculation accuracy of the following attention weight and accuracy of the recognition processing of the recognition device 5 are improved.

### (Fourth Example Embodiment)

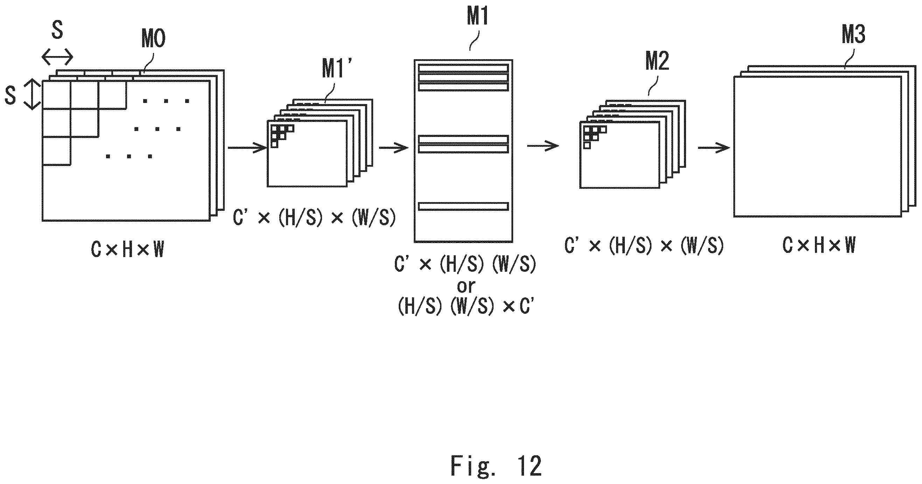

Next, a fourth example embodiment of the present disclosure will be described by using Figs. 12 to 14. Fig. 12 is a diagram for explaining an outline of processing of an attention mechanism 40 according to the fourth example embodiment. As illustrated in this figure, the attention mechanism 40 of the fourth example embodiment has a feature of generating a weighted feature map M3 in which the scale is returned to the scale equivalent to the feature map M0 by inversely converting the weighted feature map M2 that has been weighted.

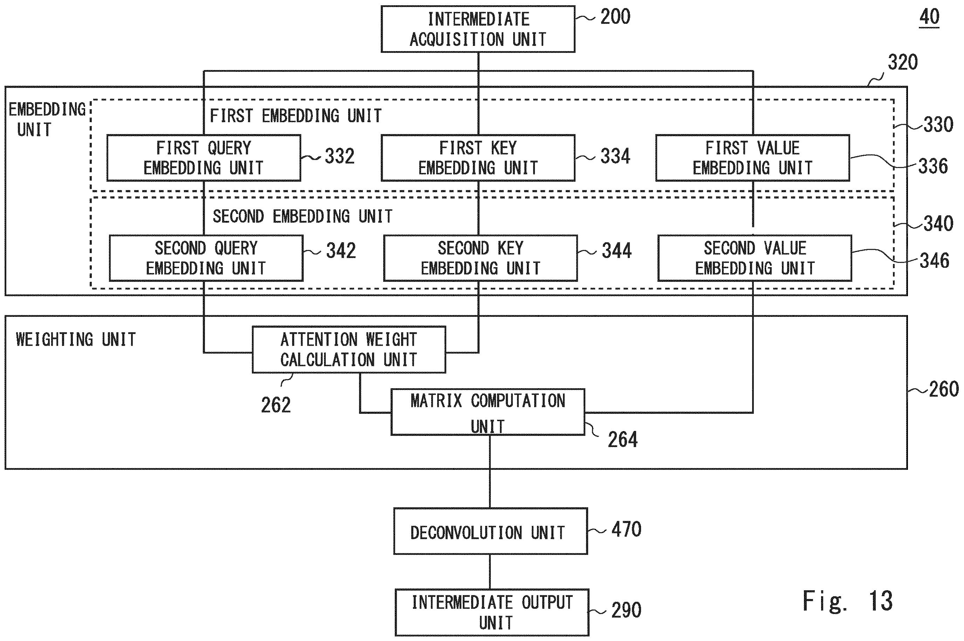

A configuration of the attention mechanism 40 of performing such processing will be described by using Fig. 13. Fig. 13 is a block diagram illustrating a configuration of the attention mechanism 40 according to the fourth example embodiment. The attention mechanism 40 is a computer or the like having a configuration and function basically similar to the attention mechanism 30 of the third example embodiment. However, the attention mechanism 40 includes a deconvolution unit 470 in addition to the configuration of the attention mechanism 30.

The deconvolution unit 470 inversely converts the weighted feature map M2 being output from the matrix computation unit 264 to change the scale, by using deconvolution computation.

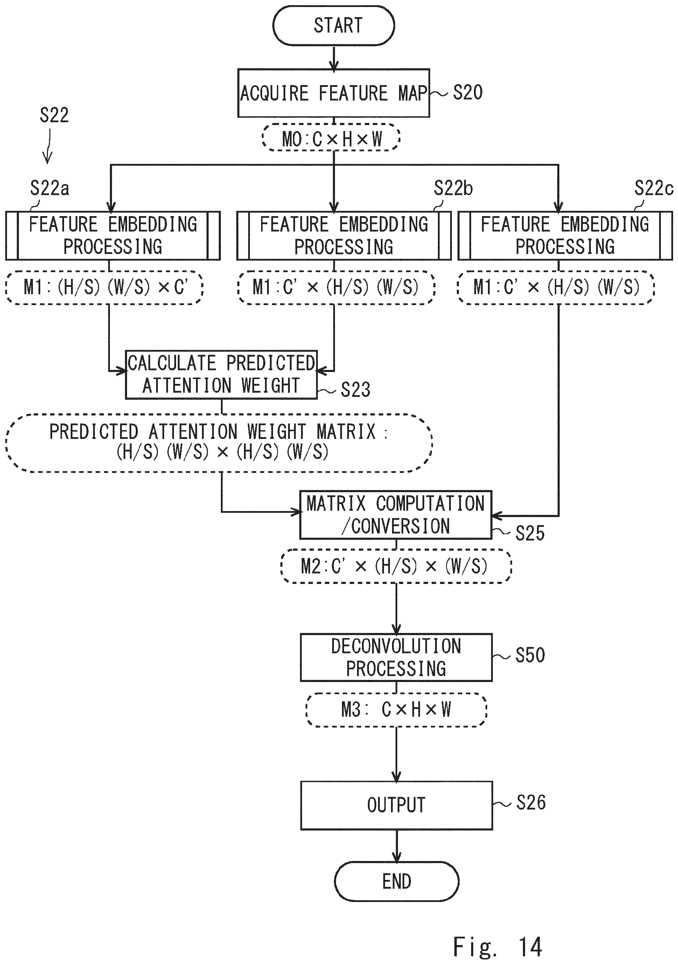

Fig. 14 is a flowchart illustrating the processing of the attention mechanism 40 according to the fourth example embodiment. Steps illustrated in Fig. 14 include S50 in addition to the steps illustrated in Fig. 7. Note that steps similar to those illustrated in Fig. 7 are denoted by the same reference numerals, and descriptions thereof are omitted.

In S50, the deconvolution unit 470 acquires necessary parameters from the learning device 6 in response to the output of the weighted feature map M2 by the matrix computation unit 264 in S25, and performs deconvolution processing on the weighted feature map M2. In the fourth example embodiment, the deconvolution unit 470 performs deconvolution computation on the weighted feature map M2 with the number of strides S by using a kernel in which the number of pixels in the first direction is S (where S>1), the kernel including the acquired parameter. As a result, the deconvolution unit 470 generates a weighted feature map M3 of CxHxW. The deconvolution unit 470 outputs the weighted feature map M3 to the intermediate output unit 290, and advances the processing to S26.

In the fourth example embodiment, basically similar processing to that illustrated in Fig. 6 is performed. However, in S13 of Fig. 6, the attention mechanism 40 at the end of the feature conversion device 2 performs feature embedding processing on the feature map M0, generates a weighted feature map M3 instead of the weighted feature map M2, and outputs the weighted feature map M3 to the recognition device 5.

In S14 of Fig. 6, the recognition device 5 performs predetermined recognition processing by using information based on the weighted feature map M3 instead of the weighted feature map M2. Then, the recognition device 5 ends the processing.

As described above, according to the fourth example embodiment, since the attention mechanism 40 returns the scale of the feature map to be output to a scale equivalent to the original feature map M0, gradient attenuation that may occur during learning can be prevented, and the layer of subsequent processing of the attention mechanism 40 can be deepened. This improves the accuracy of the recognition processing of the recognition device 5.

### (Fifth Example Embodiment)

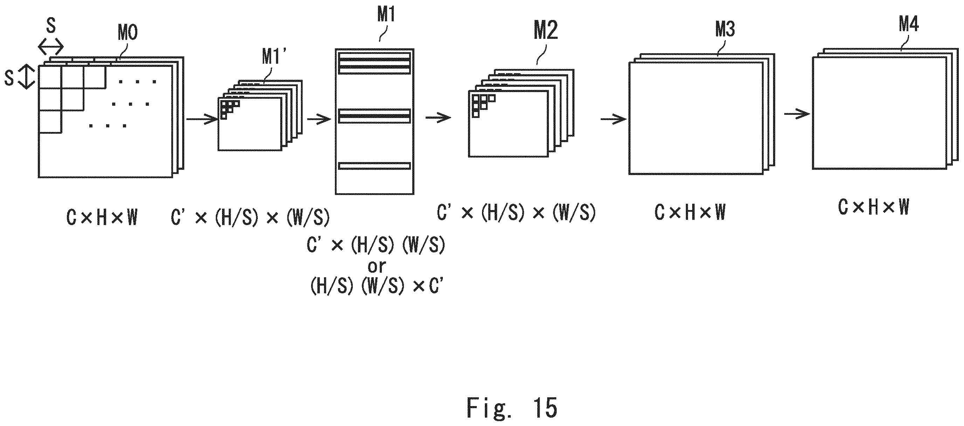

Next, a fifth example embodiment of the present disclosure will be described by using Figs. 15 to 17.

Fig. 15 is a diagram for explaining an outline of processing of an attention mechanism 50 according to the fifth example embodiment. As illustrated in this figure, the attention mechanism 50 of the fifth example embodiment is characterized in that a residual feature map M4 of CxHxW is generated from the weighted feature map M3 that has been inversely converted.

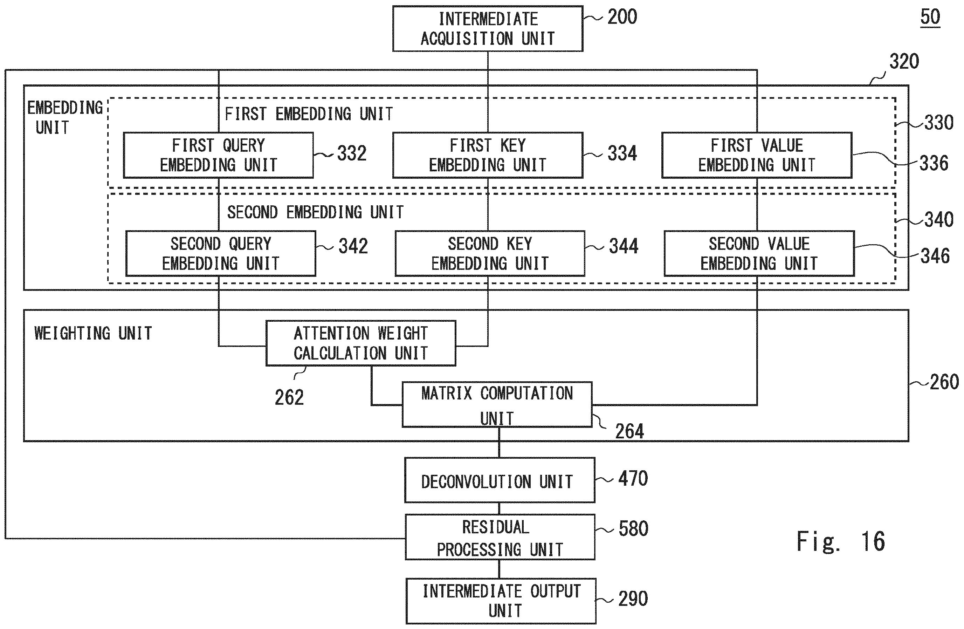

A configuration of the attention mechanism 50 of performing such processing will be described by using Fig. 16. Fig. 16 is a block diagram illustrating a configuration of the attention mechanism 50 according to the fifth example embodiment. The attention mechanism 50 is a computer or the like having a configuration and function basically similar to the attention mechanism 40 of the fourth example embodiment. However, the attention mechanism 50 includes a residual processing unit 580 in addition to the configuration of the attention mechanism 40.

The residual processing unit 580 is connected to the deconvolution unit 470 and the intermediate acquisition unit 200, takes a difference between the weighted feature map M3 being output from the deconvolution unit 470 and the feature map M0 being output from the intermediate acquisition unit 200, and generates a residual feature map M4. The residual processing unit 580 outputs the residual feature map M4 to the intermediate output unit 290.

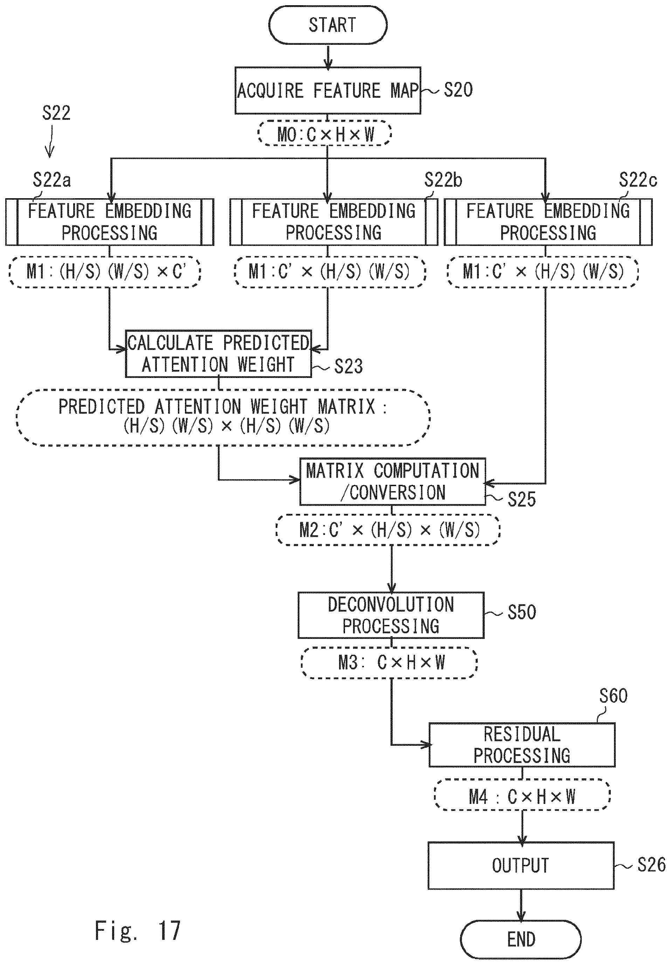

Fig. 17 is a flowchart illustrating the processing of the attention mechanism 50 according to the fifth example embodiment. Steps illustrated in Fig. 17 includes S60 in addition to the steps illustrated in Fig. 14. Note that steps similar to those illustrated in Fig. 14 are denoted by the same reference numerals, and descriptions thereof are omitted.

In S60, the residual processing unit 580 acquires the feature map M0 from the intermediate acquisition unit 200 in response to the deconvolution unit 470 outputting the weighted feature map M3 in S50. Then, the residual processing unit 580 calculates a difference between the weighted feature map M3 and the feature map M0, and generates a residual feature map M4 of CxHxW. Then, the residual processing unit 580 outputs the residual feature map M4 to the intermediate output unit 290, and advances the processing to S26.

In the fifth example embodiment, in S13 of Fig. 6, the attention mechanism 50 performs feature embedding processing on the feature map M0, generates a residual feature map M4 instead of the weighted feature map M2, and outputs the residual feature map M4 to the recognition device 5.

In S14 of Fig. 6, the recognition device 5 performs predetermined recognition processing by using the residual feature map M4 based on the weighted feature map M3 instead of the weighted feature map M2. Then, the recognition device 5 ends the processing.

Thus, according to the fifth example embodiment, since the attention mechanism 50 outputs the difference between the weighted feature map M3 and the feature map M0, the gradient attenuation that may occur during learning can be further prevented, and the layer of subsequent processing of the attention mechanism 50 can be further deepened. This improves the accuracy of the recognition processing of the recognition device 5.

In the first to fifth example embodiments described above, the computer is constituted of a computer system including a personal computer, a word processor, and the like. However, the present embodiment is not limited to this, and the computer may be constituted of a server of a Local Area Network (LAN), a host of computer (personal computer) communication, a computer system connected on the Internet, or the like. It is also possible to distribute the functions among devices on a network and configure the computer with the entire network.

Although this disclosure has been described as a hardware configuration in the first to fifth example embodiments described above, this disclosure is not limited to this. This disclosure can also be achieved by causing a Central Processing Unit (CPU) to execute a computer program for various processing such as the feature extraction processing, the attention mechanism processing, the recognition processing, and the learning processing described above.

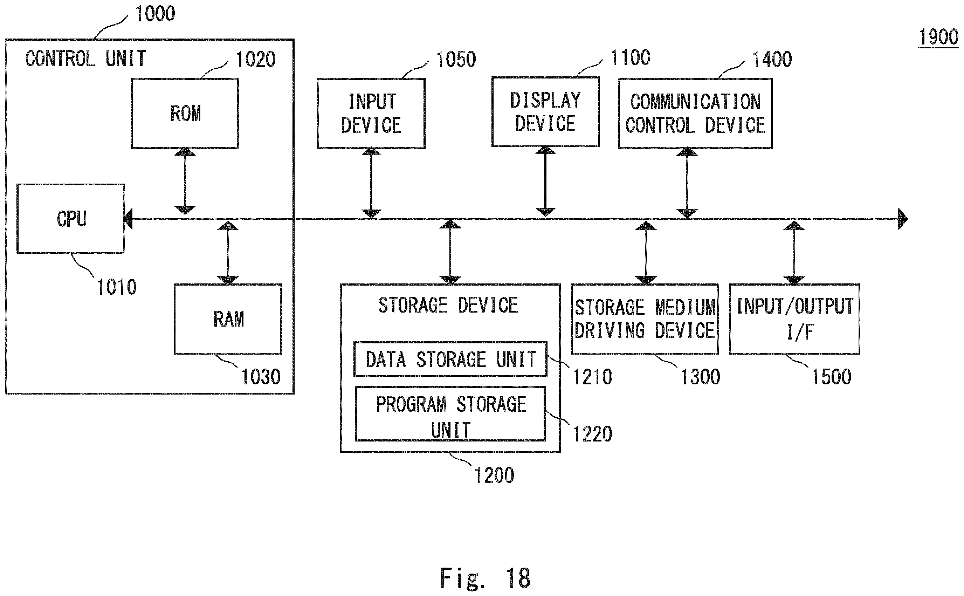

Fig. 18 is one example of a schematic configuration diagram of a computer 1900 according to the first to fifth example embodiments. As illustrated in Fig. 18, the computer 1900 includes a control unit 1000 for controlling the entire system. An input device 1050, a storage device 1200, a storage medium driving device 1300, a communication control device 1400, and an input/output I/F 1500 are connected to the control unit 1000 via a bus line such as a data bus.

The control unit 1000 includes a CPU 1010, a ROM 1020, and a RAM 1030.

The CPU 1010 performs various types of information processing and controls in accordance with programs stored in various storage units such as the ROM 1020 and the storage unit 1200.

The ROM 1020 is a read-only memory in which various programs and data for the CPU 1010 to perform various controls and computations are stored in advance.

The RAM 1030 is a random access memory to be used as a working memory for the CPU 1010. Various areas for performing various processing according to the first to fifth example embodiments can be secured in the RAM 1030.

The input device 1050 is an input device that receives an input from a user such as a keyboard, a mouse, and a touch panel. For example, on the keyboard, a ten-key pad and various keys such as function keys for executing various functions and cursor keys are arranged. The mouse is a pointing device, and is an input device that specifies an associated function by clicking a key, an icon, or the like displayed on the display device 1100. The touch panel is an input device to be disposed on a surface of the display device 1100, which specifies a touch position of a user being associated to various operation keys displayed on the screen of the display device 1100, and accepts an input of an operation key displayed in response to the touch position.

As the display device 1100, for example, a CRT, a liquid crystal display, or the like is used. On the display device, an input result by a keyboard or a mouse is displayed, and finally retrieved image information is displayed. The display device 1100 displays an image of operation keys for performing various necessary operations from the touch panel in accordance with various functions of the computer 1900.

The storage device 1200 includes a readable/writable storage medium and a driving device for reading/writing various information such as a program and data from/to the storage medium.

Although a hard disk or the like is mainly used as a storage medium to be used in the storage device 1200, a non-temporary computer readable medium that is used in a storage medium driving device 1300 to be described later may be used.

The storage device 1200 includes a data storage unit 1210, a program storage unit 1220, and other unillustrated storage units (e.g., a storage unit for backing up a program, data, or the like stored in the storage device 1200). The program storage unit 1220 stores a program for achieving various types of processing in the first to fifth example embodiments. The data storage unit 1210 stores various data of various databases according to the first to fifth example embodiments.

The storage medium driving device 1300 is a driving device for the CPU 1010 to read a computer program, data including a document, and the like from an external storage medium.

Herein, the external storage medium refers to a non-temporary computer readable medium in which a computer program, data, and the like are stored. Non-transitory computer readable media include various types of tangible storage media. Examples of non-transitory computer readable media include magnetic recording media (e.g., flexible disk, magnetic tape, hard disk drive), magneto-optical recording media (e.g., magneto-optical disk), Read Only Memory (CD-ROM), CD-R, CD-R/W, semiconductor memory (e.g., Mask ROM, Programmable ROM (PROM), Erasable PROM (EPROM), Flash ROM, Random Access Memory (RAM)). The various programs may also be supplied to the computer by various types of transitory computer readable media. Examples of transitory computer-readable media include electrical signals, optical signals, and electromagnetic waves. The temporary computer-readable medium can supply various programs to the computer via a wired communication path such as an electric wire and an optical fiber, or a wireless communication path and the storage medium driving device 1300.

More specifically, in the computer 1900, the CPU 1010 of the control unit 1000 reads various programs from an external storage medium being set in the storage medium driving device 1300, and stores the programs in the units of the storage device 1200.

When the computer 1900 executes various processing, the computer 1900 reads an appropriate program from the storage device 1200 into the RAM 1030 and executes the program. However, the computer 1900 can also read and execute a program directly from an external storage medium into the RAM 1030 by the storage medium driving device 1300 instead of from the storage device 1200. Depending on the computer, various programs and the like may be stored in the ROM 1020 in advance, and may be executed by the CPU 1010. Further, the computer 1900 may download and execute various programs and data from another storage medium via the communication control device 1400.

The communication control device 1400 is a control device for network connection between the computer 1900 and various external electronic devices such as another personal computer and a word processor. The communication control device 1400 makes it possible to access the computer 1900 from these various external electronic devices.

The input/output I/F 1500 is an interface for connecting various input/output devices via a parallel port, a serial port, a keyboard port, a mouse port, and the like.

Instead of the CPU 1010, a graphics processing unit (GPU), a field-programmable gate array (FPGA), a digital signal processor (DSP), an application specific integrated circuit (ASIC), or the like may be used.

An execution order of each processing in the systems and methods described in the claims, specification, and drawings is not expressly specified as "prior to", "before", or the like, and may be achieved in any order unless an output of the preceding processing is used in subsequent processing. For the sake of convenience, the explanation using "first", "next", and the like with respect to the operation flow in the claims, the specification, and the drawings does not imply that it is indispensable to carry out the operations in this order.

While the present disclosure has been described above with reference to the example embodiments, the present disclosure is not limited to the foregoing. Various changes may be made to the form and details of the present disclosure as will be understood by those skilled in the art within the scope of the invention.

### Reference Signs List

- 1: IMAGE RECOGNITION SYSTEM
- 2,10: FEATURE CONVERSION DEVICE
- 5: RECOGNITION DEVICE
- 6: LEARNING DEVICE
- 20,30,40,50: ATTENTION MECHANISM
- 22: FEATURE EXTRACTOR
- 100,200: INTERMEDIATE ACQUISITION UNIT
- 120,220,320: EMBEDDING UNIT
- 160,260: WEIGHTING UNIT
- 222: QUERY EMBEDDING UNIT
- 224: KEY EMBEDDING UNIT
- 226: VALUE EMBEDDING UNIT
- 262: ATTENTION WEIGHT CALCULATION UNIT
- 264: MATRIX COMPUTATION UNIT
- 290: INTERMEDIATE OUTPUT UNIT
- 330: FIRST EMBEDDING UNIT
- 332: FIRST QUERY EMBEDDING UNIT
- 334: FIRST KEY EMBEDDING UNIT
- 336: FIRST VALUE EMBEDDING UNIT
- 340: SECOND EMBEDDING UNIT
- 342: SECOND QUERY EMBEDDING UNIT
- 344: SECOND KEY EMBEDDING UNIT
- 346: SECOND VALUE EMBEDDING UNIT
- 470: DECONVOLUTION UNIT
- 580: RESIDUAL PROCESSING UNIT
- M, M0: FEATURE MAP
- M1, M1', M1": EMBEDDED FEATURE MAP
- M2, M3: WEIGHTED FEATURE MAP
- M4: RESIDUAL FEATURE MAP
- I: INPUT IMAGE
- O: OUTPUT VALUE
- 1000: CONTROL UNIT
- 1010: CPU
- 1020: ROM
- 1030: RAM
- 1050: INPUT DEVICE
- 1100: DISPLAY DEVICE
- 1200: STORAGE DEVICE
- 1210: DATA STORAGE UNIT
- 1220: PROGRAM STORAGE UNIT
- 1300: STORAGE MEDIUM DRIVING DEVICE
- 1400: COMMUNICATION CONTROL DEVICE
- 1500: INPUT/OUTPUT I/F
- 1900: COMPUTER

## Claims

1. A feature conversion device comprising:
an intermediate acquisition unit configured to acquire a feature map indicating a feature of an image;
an embedding unit configured to perform block-based feature embedding computation on the acquired feature map and generate an embedded feature map which is converted so that its scale is reduced; and
a weighting unit configured to predict an attention weight of the feature associated to a position of the image from information based on the embedded feature map by using an attention mechanism algorithm, and generate a weighted feature map associated to the feature map by using the attention weight.

2. The feature conversion device according to Claim 1, wherein
the block-based feature embedding computation includes computation of convolving a plurality of pixel values included in the feature map by applying a kernel at intervals of the same number as the number of pixels in a first direction of the kernel, and
the number of pixels in the first direction of the kernel is greater than 1.

3. The feature conversion device according to Claim 1 or 2, wherein the embedding unit includes
a first embedding unit configured to generate a first embedded feature map by downsampling the feature map that is acquired by using block-based first feature embedding computation, and
a second embedding unit configured to generate a second embedded feature map that is an input matrix of the attention mechanism algorithm, based on the first embedded feature map, by using second feature embedding computation.

4. The feature conversion device according to any one of Claims 1 to 3, further comprising a deconvolution unit configured to inversely convert a scale of the weighted feature map by using deconvolution computation.

5. The feature conversion device according to Claim 4, further comprising a residual processing unit configured to take a difference between the weighted feature map that is inversely converted and the acquired feature map.

6. An image recognition system comprising:
a feature conversion device including an intermediate acquisition unit configured to acquire a feature map indicating a feature of an image, an embedding unit configured to generate an embedded feature map which is converted so that its scale is reduced, by using block-based feature embedding computation, based on the acquired feature map, and a weighting unit configured to predict an attention weight of the feature associated to a position of the image from information based on the embedded feature map by using an attention mechanism algorithm, and generate a weighted feature map associated to the feature map by using the attention weight; and
a recognition device configured to recognize a subject included in the image by using information based on the weighted feature map.

7. The image recognition system according to Claim 6, further comprising a learning device configured to optimize a parameter of the block-based feature embedding computation by machine learning.

8. A feature conversion method comprising:
acquiring a feature map indicating a feature of an image;
performing block-based feature embedding computation on the acquired feature map and generating an embedded feature map which is converted so that its scale is reduced; and
predicting an attention weight of the feature associated to a position of the image from information based on the embedded feature map by using an attention mechanism algorithm and generating a weighted feature map associated to the feature map by using the attention weight.

9. A non-transitory computer-readable medium storing a feature conversion program causing a computer to implement:
an intermediate acquisition function of acquiring a feature map indicating a feature of an image;
an embedding function of performing block-based feature embedding computation on the acquired feature map and generating an embedded feature map which is converted so that its scale is reduced; and
a weighting function of predicting an attention weight of the feature associated to a position of the image from information based on the embedded feature map by using an attention mechanism algorithm and generating a weighted feature map associated to the feature map by using the attention weight.
